# EUROPÄISCHE PATENTSCHRIFT

(11) **EP 3 230 645 B1**
(45) Veröffentlichungstag und Bekanntmachung des Hinweises auf die Patenterteilung: **03.04.2019**
(21) Anmeldenummer: 14821541.1
(22) Anmeldetag: 12.12.2014
(51) Int. Cl.: F16L 37/113, F16L 37/36, F16L 37/373

(54) **TROCKENKUPPLUNGS-AUFNAHMETEIL EINER FLUID-TROCKENKUPPLUNG SOWIE DAMIT EINGERICHTETE FLUID-TROCKENKUPPLUNG**
DRY-COUPLING RECEIVING PART OF A DRY COUPLING FOR FLUID AND DRY COUPLING FOR FLUID ESTABLISHED THEREWITH
PIÈCE DE RÉCEPTION D'UN EMBRAYAGE À SEC D'UN EMBRAYAGE À SEC POUR LIQUIDES AINSI QUE L'EMBRAYAGE À SEC POUR LIQUIDES POURVU DE CETTE PIÈCE

(43) Veröffentlichungstag der Anmeldung: 18.10.2017
(73) Patentinhaber: Roman Seliger Armaturenfabrik GmbH, 22848 Norderstedt (DE)
(72) Erfinder: HAMKENS, Hauke Peter, 25870 Oldenswort (DE); SYLLA, Jan-Oliver, 25832 Tönning (DE)
(74) Vertreter: Stork Bamberger Patentanwälte PartmbB
(86) Internationale Anmeldenummer: PCT/EP2014/077574
(87) Internationale Veröffentlichungsnummer: WO 2016/091324

(56) Entgegenhaltungen:
- DE-A1-102012 209 629
- DE-T2- 69 720 916
- US-B1- 7 658 205

## Beschreibung

Die Erfindung betrifft ein Trockenkupplungs-Aufnahmeteil einer Fluid-Trockenkupplung, umfassend (i) ein sich entlang einer zentralen Aufnahmeteilachse axial erstreckendes rohrförmiges Aufnahmeteilgehäuse mit einem ersten Gehäuseende zum Kuppeln mit einem Trockenkupplungs-Steckteil der Trockenkupplung sowie mit einem zweiten Gehäuseende zur Verbindung mit einem Leitungselement; (ii) eine in dem Aufnahmeteilgehäuse angeordnete Ventileinrichtung, gebildet durch einen Führungs-Sitzring mit einer Sitzring-Innenwand sowie durch einen den Führungs-Sitzring mit einem Teil durchfassenden, an dem Führungs-Sitzring mittels eines Führungs-Radiallagers radial gelagerten und axial gleitbewegbaren, mit Fluid außenumströmbaren Ventilkörper, wobei der Führungs-Sitzring zum Kuppeln in eine gegen Drehung um die Aufnahmeteilachse gesicherte Sperrposition setzbar ist, wobei der Ventilkörper einen Ventilkopf, einen außerhalb des Führungs-Sitzrings liegenden Ventilfuß sowie einen mittels des Führungs-Radiallagers an der Sitzring-Innenwand gelagerten Ventilstegteil aufweist, der den Ventilkopf und den Ventilfuß miteinander verbindet und axial beabstandet, und wobei der Führungs-Sitzring an dem ersten Sitzringende einen Ventilsitz aufweist, der zusammen mit dem Ventilkopf ein Aufnahmeteil-Ventil bildet, wobei der Ventilkopf in Ventil-Schließposition dichtend in den Ventilsitz einfasst und in Ventil-Öffnungsposition an dem ersten Sitzringende aus dem Führungs-Sitzring hervortritt; (iii) eine Aufnahmeteil-Steuereinrichtung, mittels der der Ventilkörper in die Ventil-Öffnungsposition sowie umgekehrt in die Ventil-Schließposition bewegbar ist, umfassend eine um die Aufnahmeteilachse drehbare Steuerhülse mit einer Führungskulisse sowie Steuerelemente, die an dem Ventilfuß angeordnet sind und die in die Führungskulisse einfassen, wobei zentrale Körperachsen des Ventilkörpers, der Steuerhülse und des Führungs-Sitzrings koaxial mit der Aufnahmeteilachse sind, der Führungs-Sitzring und die Steuerhülse einen den Ventilkörper mit Fluidströmung beaufschlagenden Fluid-Durchgangsraum bilden und der axial bewegbar gelagerte Ventilkörper durch richtungsabhängige Drehung der Steuerhülse und entsprechende Axialverlagerung in die Ventil-Schließposition bzw. die Ventil-Öffnungsposition setzbar ist.

Eine Trockenkupplung setzt sich aus zwei Kupplungshälften zusammen, nämlich aus dem Aufnahmeteil oder Mutterteil sowie aus einem zugehörigen Steckteil oder Vaterteil. Zum Beispiel ist das Aufnahmeteil mit einer Treibstoff-Schlauchleitung verbunden, während das Steckteil einen Anschluss an einem Tank bildet. Eine gattungsgemäße Trockenkupplung weist eine typische Bauart und Funktion auf. Jede Kupplungshälfte umfasst ein Ventil mit einem Ventilkörper, der zum Öffnen und Schließen des zugehörigen Ventils axial verlagerbar ist. Im gekuppelten Zustand der beiden Kupplungshälften befinden sich die beiden Ventilkörper in einem Ventilverbund, der sich durch Drehbewegung eines mit einer Führungskulisse ausgestatteten Gehäuse-Steuerteils des Aufnahmeteils zum Öffnen und Schließen der Ventile axial verlagern lässt. Wenigstens der Ventilkörper des Steckteils wird mit Rückstellkraft beaufschlagt. Insbesondere weisen die Trockenkupplung und deren Bauteile gemäß einem NATO-Standardisierungsübereinkommen (STANAG) standardisierte Merkmale auf.

Trockenkupplungen des bekannten Bau- und Funktionstyps sind z.B. aus DE 858 617 und DE 10 2012 209 629 A1 bekannt. Aus DE 10 2012 209 629 A1 ist ein mehrteiliger Ventilkörper bekannt. Ein Ventilkopf ist mittels Schraubverbindung mit einem Ventilstegteil verbunden. Ein Ventilfuß, der einstückig mit dem Ventilstegteil ausgebildet ist, ist zum Befestigen von Steuerrollen vorgesehen. Zwischen einem Führungs-Sitzring und dem Ventilstegteil ist ein Führungs-Radiallager ausgebildet. Zur Montage bzw. Demontage einer aus dem Ventilstegteil, dem Ventilkopf, dem Ventilfuß und dem Führungs-Sitzring gebildeten Ventileinrichtung sind der Ventilkopf und das Ventilstegteil voneinander zu trennen. Es ist auch eine Ventileinrichtung gleicher Art mit einem Ventilkörper bekannt, der aus einem Ventilkopf und einem das Ventilstegteil mit Lagerrändern bildenden Ventilschwert, das einstückig in einen entsprechend dimensionierten Ventilfuß übergeht, zweiteilig zusammengefügt ist. Der Ventilkopf und das Ventilschwert sind mittels eines Bolzens, der durch einen Splint zu sichern ist, aneinander befestigt. Die Schraub- oder Bolzenverbindung weist quer im Fluid-Strömungsweg liegende Teile auf. Diese und eine aus Festigkeitsgründen der Verbindung erforderliche Überdimensionierung bedingen eine klobige, relativ wuchtige Bauform, die die FluidStrömung erheblich beeinträchtigt. Insbesondere bleibt die Größe des Fluid-Volumenstroms eingeschränkt, insbesondere mit der Folge, dass die Betankungszeit einer die Kupplung verwendenden Betankung reduziert wird. Zudem ist die Verwendung des mehrteiligen Ventilkörpers zur Montage und Demontage des Trockenkupplungs-Aufnahmeteils hinderlich und zeitaufwendig. Es entsteht unerwünschte Ausfallzeit zum Betrieb der Trockenkupplung. Der Ventilkörper und insbesondere der Ventilkopf können beim Handhaben von Werkzeug zum Verbinden der Teile beschädigt werden.

Der Erfindung liegen die Ziele zugrunde, die Ventileinrichtung des bezeichneten Trockenkupplungs-Aufnahmeteils hinsichtlich einer Strömungsoptimierung und auch einer montagefreundlichen Bauform zu verbessern.

Die Ziele werden in Verbindung mit den eingangs genannten Merkmalen dadurch erreicht, dass der außenumströmbare Ventilkörper einstückig ausgebildet ist, wobei der Ventilkopf, der Ventilstegteil und der Ventilfuß einen einstückigen Strömungskörper mit einem unterbrechungsfreien, dadurch ungestört gleichförmigen Strömungsprofil bilden und wobei eine Gestaltung des Führungs-Radiallagers zwischen dem Ventilströmungskörper und dem Führungssitzring darin besteht, dass sich der Führungs-Sitzring und der Ventil-Strömungskörper in einem Lagersitz des Führungs-Radiallagers befinden, der zwischen dem Führungs-Sitzring und dem einstückigen Ventil-Strömungskörper relative Drehung sperrt und relative axiale Gleitbewegbarkeit zulässt, wobei in dem Lagersitz korrespondierende Lagerelemente, nämlich erste Lagerelemente, die an der Sitzring-Innenwand hervorstehen, sowie zweite Lagerelemente, die an dem Ventilstegteil ausgebildet sind, in wenigstens einer axialen Lagersitz-Lagerebene liegen, wobei die korrespondierenden Lagerelemente zum Herstellen sowie zum Beseitigen des Lagersitzes durch relativen Drehversatz und relativen Axialversatz zwischen dem Führungs-Sitzring und dem Ventilkörper an Zwischenstellen längs des den Führungs-Sitzring durchfassenden Ventilkörpers zusammensteckbar und umgekehrt voneinander trennbar sind.

Das erfindungsgemäße Trockenkupplungs-Aufnahmeteil bestimmt auch eine erfindungsgemäße Fluid-Trockenkupplung, die aus dem Trockenkupplungs-Aufnahmeteil und einem damit verbundenen Trockenkupplungs-Steckteil gebildet ist, wobei das Trockenkupplungs-Steckteil ein Steckteil-Ventil mit einem Steckteil-Ventilkörper aufweist, der zusammen mit dem Aufnahmeteil-Ventilkörper einen axial verlagerbaren Schiebeverbund bildet, der gegen Rückstellkraft aus zugehörigen Ventil-Schließpositionen in Ventil-Öffnungspositionen setzbar ist.

Die Angabe "axial" wird jeweils im Zusammenhang als parallel zu oder in Richtung der zentralen Achse des Aufnahmeteilgehäuses (Aufnahmeteilachse) oder einer mit der Aufnahmeteilachse koaxialen Achse verstanden. Die Angabe "axial" bezieht sich insbesondere auf Teile oder Flächen, die sich in Axialrichtung erstrecken und in denen die Aufnahmeteilachse bzw. eine damit koaxiale Achse liegt. Die Angabe "radial" betrifft Richtungen, die von einer zugehörigen Achse ausgehen und senkrecht zu dieser Achse gerichtet sind, oder sie bezieht sich auf Teile oder Flächen, die sich in Bezug auf eine zentrale Achse dazu senkrecht und radial erstrecken.

Der erfindungsgemäße einstückige Ventil-Strömungskörper mit optimalem Strömungsprofil, zu dem eine besondere, nämlich eine eine Schlüsselverbindung ausbildende Gestaltung des Führungs-Radiallagers zwischen dem Ventil-Strömungskörper und dem Führungssitzring gehört verbessert die Funktion sowie die Handhabung zur Montage/ Demontage der Ventileinrichtung wesentlich. Man erreicht eine strömungsoptimierte und montagefreundliche Bauform. Der einstückige Strömungskörper ist vollkommen frei von separaten Quer- und/oder Montageelementen. Mit der Einstückigkeit erreicht man ein unterbrechungsfreies, dadurch ungestört gleichförmiges Strömungsprofil. Übergangsflächen zwischen dem Ventilkopf, dem Ventilstegteil und dem Ventilfuß sind glatt. Kanten - oder Ecken, die partielle Strömungsabrisse herbeiführen können, sind beseitigt. Insbesondere lässt sich das Strömungsprofil an Strömungserfordernisse anpassen. Durch das ungestört gleichförmige Strömungsprofil erzielt man einen besonders großen Volumenstrom. Dies ist besonders vorteilhaft zum Reduzieren von Betankungszeit. Die Beschädigungsanfälligkeit von mehrteilig zu montierenden Ventil-Strömungskörpern entfällt. Hinsichtlich der Einstückigkeit wird unter dem Ventilkopf auch ein mantelförmiger Körperteil verstanden, der stegseitig unter einer Kopffläche liegt und bei geschlossenem Aufnahmeteil-Ventil in den Ventilsitz einfasst und den Führungs-Sitzring durchfasst. Das heißt, dass Bestandteil eines einstückigen Ventilkörpers auch ein Ventilkopf ist, der an seiner äußeren, dem Führungs-Sitzring abgewandten Stirnseite mit einer Kopfplatte oder dergleichen abschließt. Mit dieser bleibt der Ventilkörper zur Montage/Demontage der Ventilbaueinheit einteilig, und das Strömungsprofil wird nicht beeinträchtigt.

Eine besondere Gestaltung des Strömungsprofils des einstückigen Strömungskörpers besteht darin, dass der Ventilkopf gebildet ist durch einen eine Kurvenkontur aufweisenden Drehkörperabschnitt, der sitzseitig, nämlich an einer Kopfoberseite mit einer Ventiltellerfläche oder Kopfoberfläche abschließt und mit glatter, ebener Fläche stetig in den Ventilstegteil übergeht, dass der Ventilstegteil gebildet ist durch wenigstens ein plattenförmiges Stegelement mit Lagerelemente des Führungs-Radiallagers bildenden Plattenrändern, wobei das plattenförmige Stegelement stetig mit glatter, ebener Fläche in den Ventilfuß übergeht, und dass der Ventilfuß gebildet ist durch wenigstens ein radiales Fuß-Querelement, das zur zentralen Körperachse des Ventilkörpers senkrecht gerichtet ist. Besonders vorteilhaft kann das plattenförmige Stegelement axiale Plattenränder aufweisen, die schienenartige Lagerelemente des Führungs-Radiallagers zwischen dem Führungs-Sitzring und dem Ventil-/ Strömungskörper bilden. Der Drehkörperabschnitt kann vorteilhaft die Form eines konvex gewölbten Abschnitts, zum Beispiel eines kugelförmigen Abschnitts aufweisen.

Ein Strömungsprofil, das sich zur Strömungsoptimierung als besonders wirksam erwiesen hat, weist vorzugsweise in nur zwei gegenüberliegenden Längsansichten entlang der zentralen Körperachse des Strömungskörpers die gleiche Außenkontur auf. Eine bevorzugte Gestaltung der Außenkontur ist gebildet durch, sitzseitig beginnend, einen die Form des genannten Drehkörperabschnitts bestimmenden ersten Kurvenabschnitt, einen in der Richtung gewendeten anschließenden zweiten Kurvenabschnitt, einen durch das axial ausgerichtete plattenförmige Stegelement bestimmten linearen geraden dritten Abschnitt, in den der zweite Kurvenabschnitt unter flachem Winkel übergeht, und einen vierten Kurvenabschnitt, in den der dritte Abschnitt übergeht und der durch einen Fußquerschnitt des Fuß-Querelements bestimmt ist, mit dem das fußseitige Ende des Ventilkörpers dicker als das plattenförmige Stegelement ist.

Eine weitere bevorzugte Gestaltung besteht darin, dass radiale Querdurchmesser des Ventilstegteils und des Ventilfußes zumindest im Wesentlichen gleich sind und einem Innendurchmesser des Fluid-Durchgangsraums entsprechen. Insbesondere erreicht man damit, dass der Ventilfuß, der einen Steuerfuß der Aufnahmeteil-Steuereinrichtung bildet, passgenau in der Steuerhülse sitzt. Das heißt, dass das radiale Quermaß des Ventilfußes mit maximaler Größe an den Innendurchmesser der Steuerhülse angepasst ist, wobei der Ventilfuß axial bewegungsfrei bleibt.

Die Gestaltung des Führungs-Radiallagers ist besonders vorteilhaft in Verbindung mit der genannten maximalen Querdimensionierung des Ventil-Strömungskörpers. Die Zwischenstellen sind vorzugsweise durch Montageausnehmungen gebildet, in die ein korrespondierendes Lagerelement durch Montage-Positionierung durch den Dreh-/Axialversatz setzbar ist. Zum Herstellen des Lagersitzes ist eine Überlappungsverbindung der korrespondierenden Lagerelemente eingerichtet, in die die korrespondierenden Lagerelemente aus der Montageposition durch Axialversatz gelangen. Umgekehrt sind die korrespondierenden Lagerelemente aus der Überlappungsverbindung durch Axialversatz in die
Montageposition herausbewegbar. Vorteilhaft weisen die Lagerelemente, die an der Sitzring-Innenwand hervorstehen, U-förmige Ausnehmungen auf, in die die zweiten Lagerelemente, zum Beispiel Lagerränder an dem Stegelement des Ventilkörpers, axial einsteckbar sind.

Mit dem erfindungsgemäßen einstückigen Ventil-Strömungskörper kann die Ventileinrichtung besonders vorteilhaft als eine durch Zusammensetzen des Ventil-Strömungskörpers und des Führungs-Sitzrings vorfertigbare Ventil-Baueinheit eingerichtet werden. Vorteilhaft ist in dieser Bauform zwischen den korrespondierenden Lagerelementen der wenigstens einen Lagersitz-Lagerebene die Schlüsselverbindung eingerichtet.

Eine besonders bevorzugte Bauform der erfindungsgemäß mit dem einstückigen Ventil-Strömungskörper eingerichteten Ventileinrichtung und der genannten Radiallager-Schlüsselverbindung besteht darin, dass das Strömungsprofil mittels des Führungs-Radiallagers besonders ausgerichtet wird. Merkmale dieser Ausgestaltung bestehen darin, dass der Ventilfuß durch wenigstens ein das Strömungsprofil fußseitig bestimmendes radiales Fußquerelement gebildet ist, das in der Lagersitz-Lagerebene der Schlüsselverbindung ausgerichtet ist und einen radialen Fuß-Querdurchmesser aufweist, der größer als ein Lagerinnendurchmesser ist, der durch diagonalen freien Abstand der ersten Lagerelemente bestimmt ist. Eine montagetechnisch besonders günstige Bauform besteht dann darin, dass die ersten Lagerelemente nasenförmige Lagerelemente und die zweiten Lagerelemente schienenförmige Lagerelemente sind und dass an den schienenförmigen Lagerelementen zwischen dem Ventil-Stegteil und dem Fußquerelement die Montageausnehmungen ausgebildet sind, in die die nasenförmigen Lagerelemente zum Herstellen und Beseitigen des Lagersitzes der Schlüsselverbindung setzbar sind. Die Überlappungsverbindung wird insbesondere dadurch eingerichtet, dass die nasenförmigen Lagerelemente U-förmige Ausnehmungen aufweisen, in die die schienenförmigen Lagerelemente einfassen.

Auf die genannten und noch andere zweckmäßige und vorteilhafte Ausgestaltungen der Erfindung sind Unteransprüche gerichtet. Lediglich besonders zweckmäßige und vorteilhafte Ausbildungsformen und-möglichkeiten werden anhand der folgenden Beschreibung der in der schematischen Zeichnung dargestellten Ausführungsbeispiele näher beschrieben. Jede beschriebene Einzel- oder Detailgestaltung innerhalb eines Ausführungsbeispiels ist als strukturell selbständiges Detailbeispiel für andere nicht oder nicht vollständig beschriebene, unter die Erfindung fallende Ausführungen und Gestaltungen zu verstehen. Im Folgenden wird insbesondere mit der Angabe "allgemein" ein solches Merkmal bezeichnet und verstanden, das isoliert von anderen Merkmalen eines oder mehrerer Ausführungsbeispiele zu dem erfindungsgemäßen Erfolg der allgemeinen Lehre der Erfindung beiträgt.

Es zeigen
- Fig. 1A, 1B: im Längsschnitt eine mit einem erfindungsgemäßen Trockenkupplungs-Aufnahmeteil ausgestattete erfindungsgemäße Trockenkupplung mit geschlossenen und geöffneten Ventilen,
- Fig. 2A, 2B: im Längsschnitt das mit dem erfindungsgemäßen Ventil-Strömungskörper ausgestattete Aufnahmeteil der Trockenkupplung gemäß Fig. 1A, 1B mit geschlossenem und geöffnetem Ventil,
- Fig. 3: in axonometrischer Explosionsdarstellung Teile der Trockenkupplung gemäß Fig. 1A und 1B,
- Fig. 4A, 4B: eine Steuerhülse des Aufnahmeteils gemäß Fig. 2A, 2B.
- Fig. 5A-5B: in räumlicher Ansicht sowie in Seitenansicht den Ventil-Strömungskörper des Trockenkupplungs-Aufnahmeteils gemäß Fig. 2A, 2B und
- Fig. 6A, 6B, 7A, 7B und 8A, 8B: in Längsansicht und Stirnansicht, teilweise geschnitten, eine Ventil-Baueinheit mit Ventil-Strömungskörper in fertiggestelltem Zustand (Fig. 6A, 6B) sowie in Phasen der Montage.

In der Zeichnung wird ein erfindungsgemäßes Trockenkupplungs-Aufnahmeteil 6 sowohl in der Einbauposition und -anordnung in einer Trockenkupplung 100 als auch davon getrennt dargestellt. Eine Ventileinrichtung 1 des Aufnahmeteils 6 ist allgemein mit einem erfindungsgemäßen Aufnahmeteil-Ventilkörper 3, nämlich einem Ventil-Strömungskörper 36 ausgestattet. Die Ventileinrichtung 1 bildet im Ausführungsbeispiel ein eigenständiges Modulteil des Aufnahmeteils 6, nämlich eine Ventil-Baueinheit, die gleichfalls mit dem Bezugszeichen 1 bezeichnet wird.

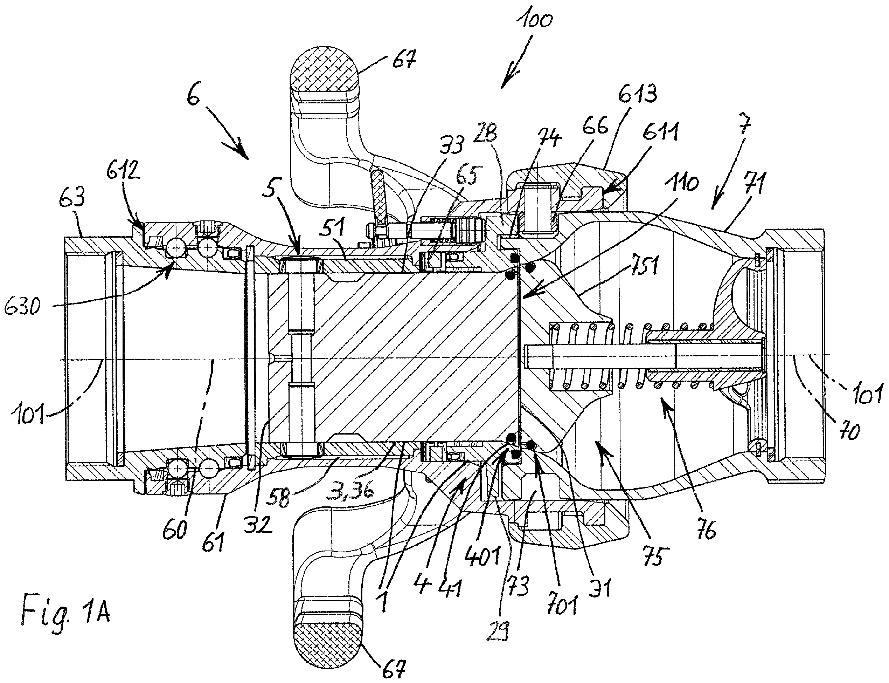

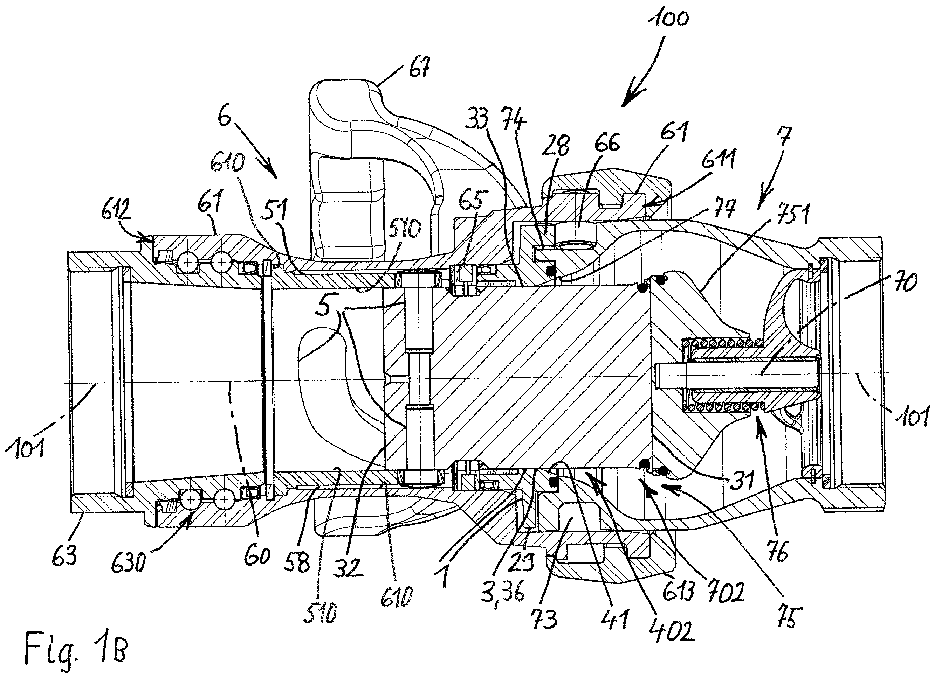

Die in Fig. 1A und 1B in gekuppeltem Zustand dargestellte Trockenkupplung 100 weist das Aufnahmeteil 6 (Mutterteil) und ein Steckteil 7 (Vaterteil) auf, die Kupplungshälften bilden. Das Aufnahmeteil 6 und das Steckteil 7 sind im Bereich einer Kupplungs-Trennstelle 110 aneinander gekuppelt. Eine Aufnahmeteilachse 60 und eine Steckteilachse 70 fallen in einer Kupplungsachse 101 zusammen. Im Kupplungszustand liegen an der Trennstelle 110 der erfindungsgemäße Ventil-Strömungskörper 36, der Bestandteil eines Aufnahmeteil-Ventils 4 ist, und ein Steckteil-Ventilkörper 751 eines Steckteil-Ventils 75 aneinander, wobei sie sich in einem in der Kupplungsachse 101 verlagerbaren Schiebeverbund befinden. Der Steckteil-Ventilkörper 751 ist in einem Steckteil-Gehäuse 71 gegen Federkraft einer Druckkrafteinrichtung 76 axial schiebebewegbar gelagert. Der Ventil-Strömungskörper 36 ist innerhalb eines rohrförmigen Aufnahmeteilgehäuses 61 gelagert und in Axialrichtung in definierte Positionen translatorisch bewegbar. Eine Aufnahmeteil-Steuereinrichtung 5 setzt eine Drehbewegung des Aufnahmeteilgehäuses 61 um die Kupplungsachse 101 in die translatorische Bewegung um. Gehäuse-Handgriffe 67 sind an dem Aufnahmeteilgehäuse 61 zur Drehverstellung angebracht.

In Fig. 1A befinden sich die Ventilkörper 3, 751 in Schließpositionen 401, 701 der Ventile 4 und 75. Fluid-Durchgang wird infolgedessen gesperrt. Der Ventil-Strömungskörper 36 weist einen Ventilkopf 31 auf, der bei geschlossenem Aufnahmeteil-Ventil 4 in einen Aufnahmeteil-Ventilsitz 41 einfasst. An der Trennstelle 110 fasst der Steckteil-Ventilkörper 751 entsprechend in einen Steckteil-Ventilsitz 77 ein. Im Schließzustand der Ventile 4, 75 gemäß Fig. 1A können die Kupplungshälften durch Lösen von Anschlusselementen 66, 73, die sie verbinden, voneinander getrennt werden.

Ebenfalls ausgehend von dem Kupplungszustand gemäß Fig. 1A können die Ventile 4, 75 zum Durchleiten von Fluid durch die Trockenkupplung 100 geöffnet werden. Infolge einer definierten Drehverstellung einer Steuerhülse 51 der Aufnahmeteil-Steuereinrichtung 5, die drehfest mit dem Aufnahmeteilgehäuse 61 verbunden ist, wird der Ventil-Strömungskörper 36 axial verlagert, so dass der Ventilkopf 31 den Ventilsitz 41 in einer Aufnahmeteil-Ventilöffnungsposition 402 verlässt und den Steckteil-Ventilkörper 751 gegen die Federkraft der Druckkrafteinrichtung 76 in eine Steckteil-Ventilöffnungsposition 702 axial verschiebt. Mittels der Steuereinrichtung 5 wird die Lage des Ventil-Schiebeverbunds zum Öffnen der Ventile 4, 75 definiert und beibehalten. Dieser Zustand ist in Fig. 1B dargestellt. Zum Schließen der Ventile 4, 75 wird der Ventil-Schiebeverbund durch umgekehrte Drehverstellung der Steuerhülse 51 unter der Kraft der Druckkrafteinrichtung 76 wieder in die Position gemäß Fig. 1A zurückgesetzt.

An dem ersten Gehäuseende 611 des Aufnahmeteilgehäuses 61 ist eine Schutzmanschette 613 angebracht. Zwischen den Teilen der Ventile 4, 75 und den anderen Teilen der beiden Kupplungshälften sind jeweils übliche Dichtungselemente angeordnet.

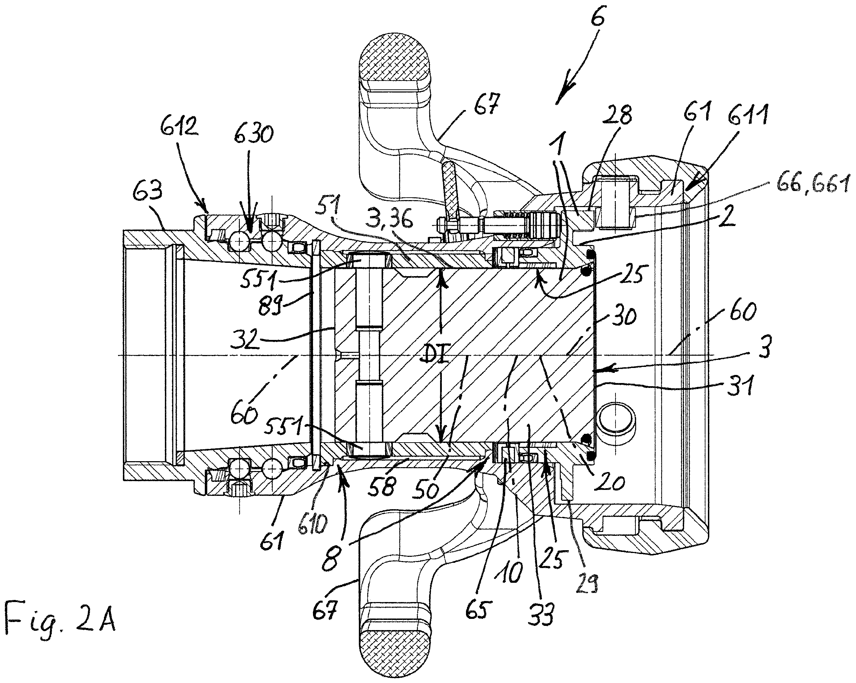

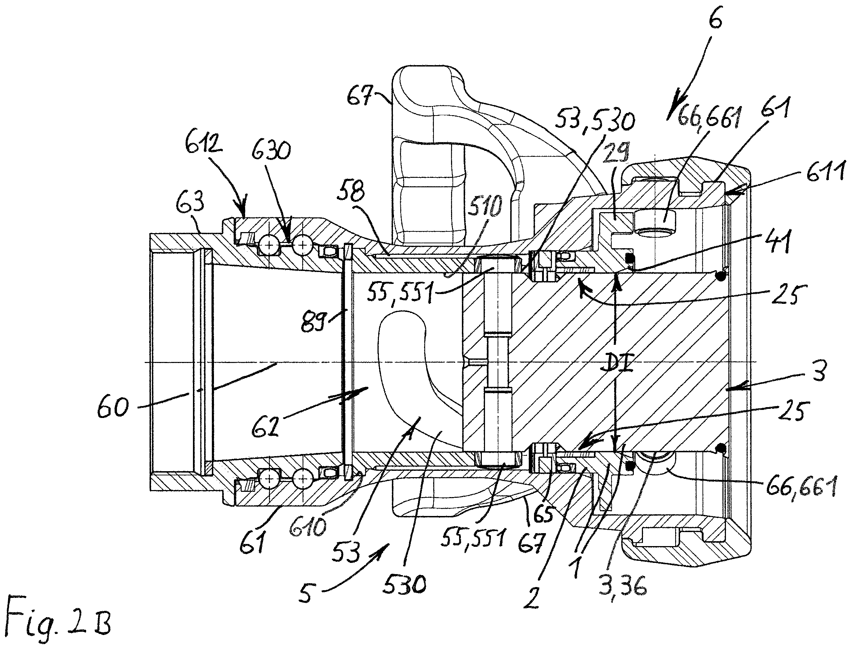

Anhand der Fig. 2A und 2B ist das Trockenkupplungs-Aufnahmeteil 6 detaillierter dargestellt. In Fig. 2A befindet sich das Aufnahmeteil-Ventil 4 in geschlossenem Zustand 401, während in Fig. 2B die Öffnungsposition 402 dargestellt ist. Das Aufnahmeteil 6 setzt sich aus dem Aufnahmeteilgehäuse 61, der Steuerhülse 51 und der Ventil-Einrichtung 1 zusammen.

Allgemein werden stirnseitige Seiten, Enden und Bereiche von sich axial erstreckenden Bauelementen, die der Kuppelseite des Trockenkupplungs-Aufnahmeteils 6 zugewandt sind oder im Bereich der Kuppelseite liegen, mit "vorderseitig" oder "Vorderseite" beschrieben, während entgegengesetzt liegende Enden, Seiten oder Bereiche mit "rückseitig" oder "Rückseite" bezeichnet werden.

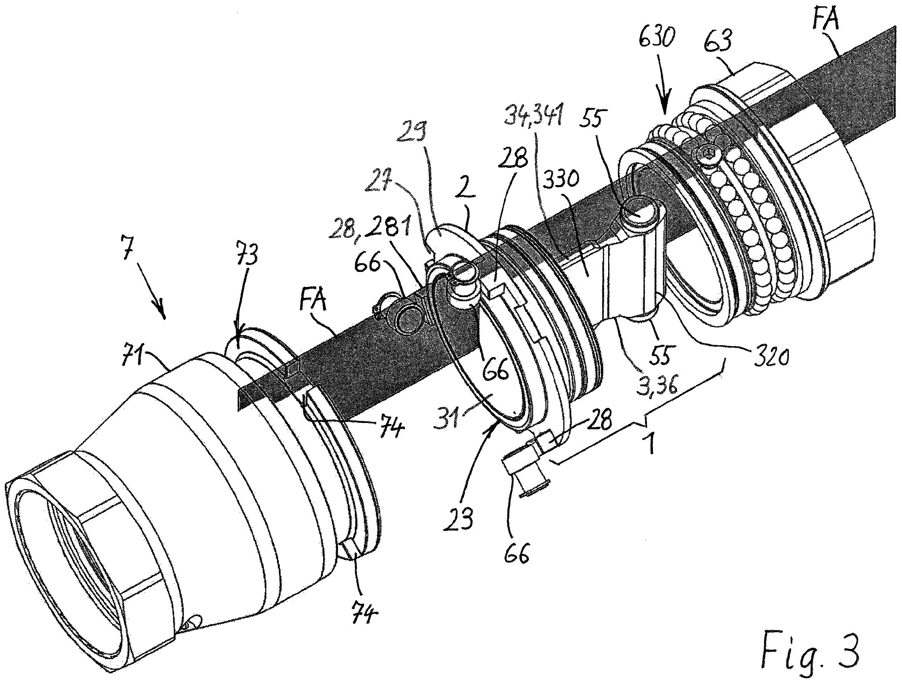

Das erste Gehäuseende 611 an der Vorderseite des Aufnahmeteilgehäuses 61 ist zum Kuppeln mit dem Trockenkupplungs-Steckteil 7 eingerichtet. Ein zweites Gehäuseende 612 an der Stirnrückseite des Aufnahmeteilgehäuses 61 ist zur Verbindung mit einem nicht dargestellten Leitungs- oder Schlauchelement eingerichtet. Im Ausführungsbeispiel ist das Aufnahmeteilgehäuse 61 mit einem Drehgelenkteil 63 bestückt, das an dem rückseitigen Gehäuseende 612 mittels eines Kugellager-Drehgelenks 630 um die Aufnahmeteilachse 60 drehbar gelagert und zum Anschluss an eine Leitung eingerichtet ist. An dem vorderen Gehäuseende 611 sind innenliegend Anschlusselemente 66, nämlich Anschluss- oder Trennrollen 661 angeordnet, die zum Verbinden mit dem Kupplungs-Steckteil 7 in das Anschlusselement 73, nämlich in eine umlaufende Anschlussnut des Steckteils 7 setzbar sind. Ein Flanschrand des Steckteils 7 weist Anschlussausnehmungen 74 auf, durch die die Anschlusselemente 66 hindurchgesetzt und durch die Drehverstellung des Aufnahmeteilgehäuses 61 in der Anschlussnut gefangen werden. Positionierung und Zuordnung gehen insbesondere aus Fig. 3 hervor.

Die Steuerhülse 51 der Steuereinrichtung 5 ist konzentrisch in das Aufnahmeteilgehäuse 61 eingesetzt, wobei sie, wie aus Fig. 2A und 2B ersichtlich, an dem rückseitigen, Gehäuseende 612 in das Aufnahmeteilgehäuse 61 einführbar ist. Zwischen dem Aufnahmeteilgehäuse 61 und der Steuerhülse 51 ist eine schraub- und klemmfreie Steuerhülsen-Steckverbindung 8 ausgebildet, die die drehfeste Verbindung der Steuerhülse 51 mit dem Aufnahmeteilgehäuse 61 herstellt und die Steuerhülse 51 an ihren beiden Stirnenden in Richtung zum kuppelseitigen Gehäuseende 611 gegen Anschläge axial lagert. Die Steuerhülse 51 ist an ihrer Rückseite mittels eines Sicherungselements 89 in Form eines Sicherungsrings an dem Aufnahmeteilgehäuse 61 festgesetzt, der einfach anzubringen und zu entfernen ist. Die Steuerhülse kann auch auf andere Weise, zum Beispiel mittels Klemm-, Schraub- und/oder Stiftverbindung, mit dem Aufnahmeteilgehäuse verbunden sein. Auch können das Aufnahmeteilgehäuse und die Steuerhülse einstückig, zum Beispiel in einem Gussteil vereinigt sein.

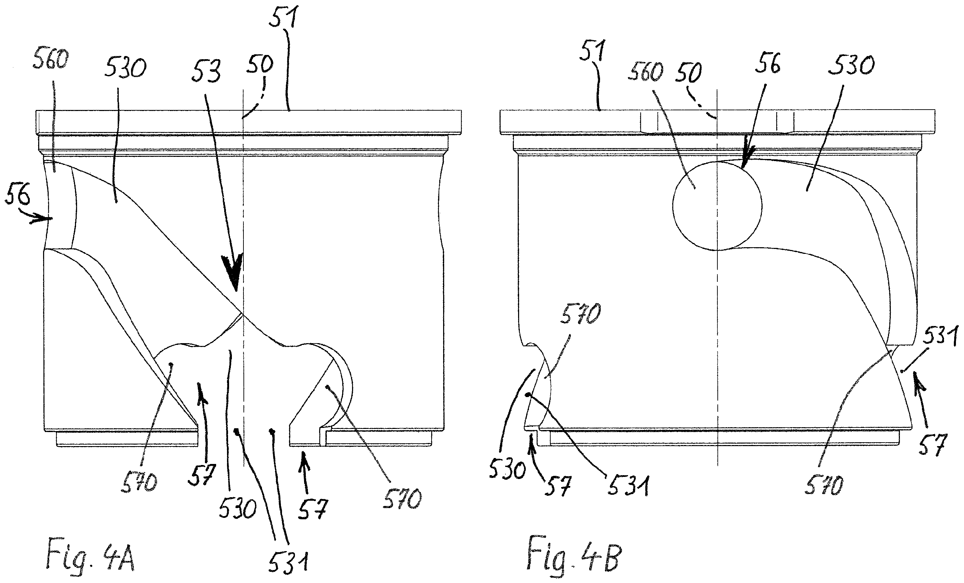

Das Maß der Drehverstellung der gemeinsam mit dem Aufnahmeteilgehäuse 61 um die Aufnahmeteilachse 60 drehbaren Steuerhülse 51 sowie des damit bewirkten translatorischen Hubs des Ventil-Strömungskörpers 36 werden durch eine Führungskulisse 53 mit zwei Steuerkurven 530 bestimmt. Wie aus Fig. 4A, 4B ersichtlich, sind die beiden Steuerkurven 530 im Umfangsabstand von 180° versetzt angeordnet, wobei sie sich in gleicher Form und Ausrichtung von einem geschlossenen inneren Steuerkurvenende 56 helixförmig zu einem offenen äußeren Steuerkurvenende 57 hin erstrecken. Die offenen äußeren Steuerkurvenenden 57 sind an der Vorderseite der Steuerhülse 51 mit axialen Kulissenöffnungen 531 axial offen. Die axiale Länge der Steuerhülse 51 ist derart bemessen, dass an der Vorderseite der Steuerhülse 51 ein Führungs-Sitzring 2 unter Zwischenschaltung eines Sitzring-Federelements 65 anschließt und in dem Aufnahmeteilgehäuse 61 Platz findet. Der Führungs-Sitzring 2 und die Steuerhülse 51 bilden die Innenwandung eines Fluid-Durchgangsraums 62. Eine Innenwand 510 der Steuerhülse 51 und eine Sitzring-Innenwand 21 weisen einen gemeinsamen Innendurchmesser DI auf.

Die Steuereinrichtung 5 weist weiterhin Steuerelemente 55 auf, zum Beispiel in Form von durch Steuerrollen 551 gebildeten Steuerköpfen, die allgemein an einem rückwärtigen Teil des Ventilkörpers 3 angeordnet sind und in die Steuerkurven 530 einfassen. Zweckmäßig bildet die Führungskulisse 53 eine Führung, die den maximalen Hub des Ventilkörpers 3 infolge einer Drehverstellung der Steuerhülse 51 von mindestens 90°, vorzugsweise von 100°bis etwa 120°bewirkt.

Der Ventil-Strömungskörper 36, die Steuerhülse 51 und der Führungs-Sitzring 2 weisen zugehörige zentrale Körperachsen 30, 50 und 20 auf, die koaxial mit der Aufnahmeteilachse 60 sind. Das Aufnahmeteilgehäuse 61, die Steuerhülse 51, der Führungs-Sitzring 2 und der Ventilkopf 31 sind Teile oder Abschnitte mit kreisförmigen Querschnitten.

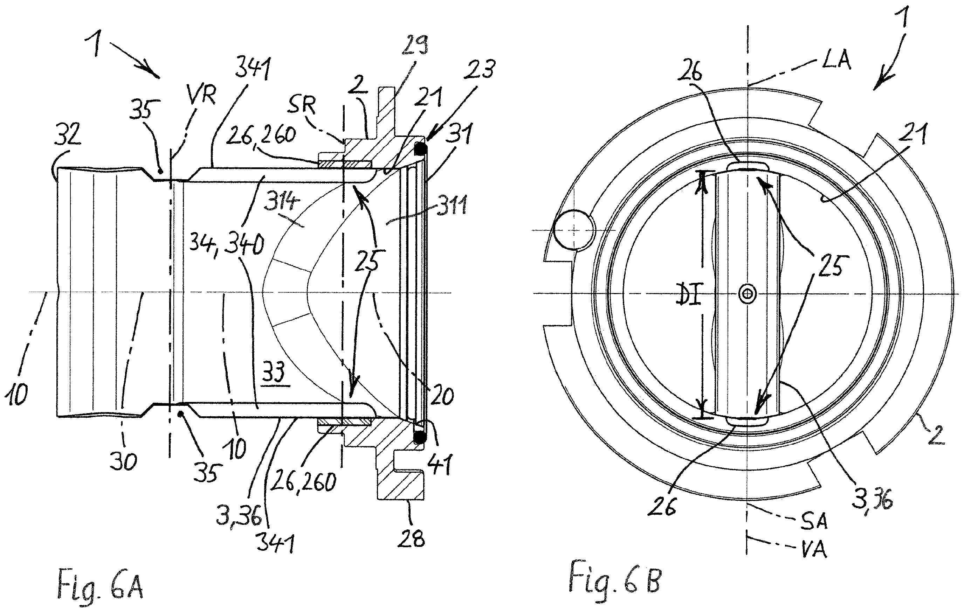

Die Ventil-Baueinheit 1, wie sie in Fig. 6A, 6B dargestellt ist, ist ein vorgefertigtes, selbständig handhabbares Bauteil. Die Ventil-Baueinheit 1 umfasst den Führungs-Sitzring 2 mit der Sitzring-Innenwand 21 und den Ventil-Strömungskörper 36, der erfindungsgemäß ausschließlich außenumströmbar und einstückig ausgebildet ist, und zwar mit dem Ventilkopf 31, einem den rückwärtigen Teil bildenden Ventilfuß 32 sowie einem Ventilstegteil 33, der den Ventilkopf 31 und den Ventilfuß 32 miteinander verbindet und axial beabstandet. Ein Führungs-Radiallager 25 lagert den Ventilstegteil 33 an der Sitzring-Innenwand 21 derart, dass der Ventil-Strömungskörper 36 entlang einer zentralen Körperachse 10 der Ventil-Baueinheit 1 zur translatorischen Verstellbewegung axial gleitbewegbar ist. An einem ersten, vorderen Sitzringende 23 ist der Ventilsitz 41 ausgebildet.

Wie insbesondere aus Fig. 3 ersichtlich, sind an dem Sitzringende 23 mit Umfangsabstand von 120° drei stirnseitig vorspringende Anschlusselemente 28 in Form von Nocken ausgebildet, denen die drei Gehäuse-Anschlusselemente 66 zugeordnet sind. Die Anschlusselemente 28 sind an einem vorderseitigen Außenrand 29 des Führungs-Sitzrings 2 ausgebildet. Die Zuordnung und Anordnung ist derart, dass die Sitzring-Anschlusselemente 28 und die Gehäuse-Anschlusselemente 66 zum Kuppeln und Trennen der Kupplungshälften axial miteinander fluchten. In Fig. 3 ist nur eine Flucht-Axialebene FA dargestellt. Wie aus Fig. 1A, 2A ersichtlich, wird der Führungs-Sitzring 2 im Aufnahmeteilgehäuse 61 zwischen den Anschlusselementen 66 und dem Sitzring-Federelement 65 gefangen gehalten. Man erkennt, dass die Sitzring-Anschluss-elemente 28 in die Steckteil-Anschlussausnehmungen 74 einfassen, wenn die Kupplungshälften aneinander gekuppelt sind. Dadurch ist der Führungs-Sitzring 2 zum Kuppeln und während des Kuppelns in eine Sperrposition setzbar, die relative Drehung zwischen dem Führungs-Sitzring 2 und dem Steckteilgehäuse 71 sperrt.

Die Ventil-Baueinheit 1 wird zur Montage mit an den Ventilfuß 32 angesetzten Steuerelementen 55 in das Aufnahmeteilgehäuse 61 eingesetzt, wobei die Steuerelemente 55 in Axialrichtung in die axialen Kulissenöffnungen 531 einführbar sind. Bei diesem Vorgang muss der Außenrand 29 des Führungs-Sitzrings 2 die Gehäuse-Anschlusselemente 66 passieren. Dies gelingt im Ausführungsbeispiel dadurch, dass in den Außenrand 29 drei Randausnehmungen 27 eingebracht sind, die den Sitzring-Anschlusselementen 28 zugeordnet sind. Die Randausnehmungen 27 befinden sich von den Anschlusselementen 28 in einem Umfangsabstand, der dem Umfangsabstand der axialen Kulissenöffnungen 531 von den Steuerkurven-Raststellen 570 entspricht.

Das Führungs-Radiallager 25 sperrt zwischen dem Führungs-Sitzring 2 und dem Ventil-Strömungskörper 36 relative Drehung, während es die relative axiale Gleitbewegbarkeit zulässt. Erste Lagerelemente 26, die an der Sitzring-Innenwand 21 hervorstehen, und zweite Lagerelemente 34, die an dem Ventilstegteil 33 ausgebildet sind, fassen korrespondierend axial und radial ineinander und bilden dadurch in Überlappungsverbindung einen Lagersitz. Die korrespondierenden Lagerelemente 26, 34 sind durch Lagerelementpaare gebildet, die jeweils ein nasenförmiges Lagerelement 260 mit U-förmiger Ausnehmung und ein schienenförmiges Lagerelement 340 aufweisen. In jedem Lagerelement-Paar überlappen das nasenförmige Lagerelement 260 und das korrespondierende schienenförmige Lagerelement 340 einander radial und axial.

Die beiden Lagerelement-Paare sind im Umfangsabstand von 180° angeordnet, wobei an der Sitzring-Innenwand 21 die nasenförmigen Lagerelemente 260 gegenüberliegend hervorstehen und die schienenförmigen Lagerelemente 340 Lagerränder 341 sind, die an dem Ventilstegteil 33 ausgebildet sind. In einer zu dem Lagersitz gehörenden Lagersitz-Lagerebene LA fallen eine axiale Sitzring-Lagerebene SA, in der die nasenförmigen Lagerelemente 260 liegen, und eine axiale Strömungskörper-Lagerebene VA, in der die schienenförmigen Lagerelemente 340 liegen, zusammen, (Fig. 6A, 6B).

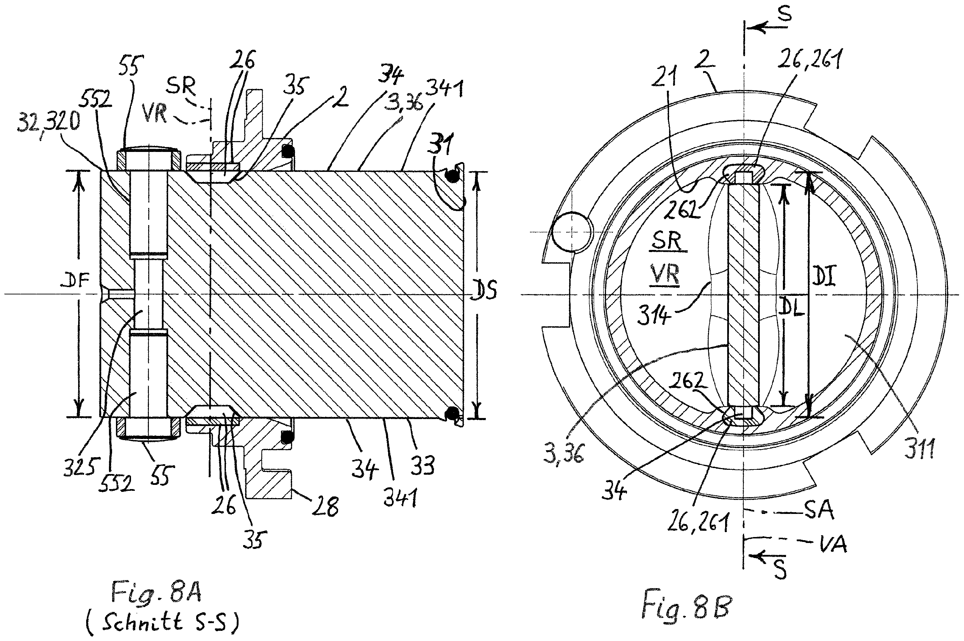

Der einstückige Ventil-Strömungskörper 36 wird z.B. aus einem Guss- und/oder Frästeil gebildet. Der Ventilstegteil 33 ist ein plattenförmiges Stegelement 330 in Form eines Schwerts. Die Ränder des Stegelements 330 sind die Lagerränder 341. Der Ventilfuß 32 ist durch ein radiales Fußquerelement 320 gebildet, nämlich durch eine flossenartige Verdickung, in die das schwertförmige Stegelement 330 übergeht. Das Fußquerelement 320 ist wie das Stegelement 330 in der Lagersitz-Lagerebene LA der schienenförmigen Lagerelemente 340 angeordnet und weist einen Fuß-Querdurchmesser DF auf, der größer als ein Lagerinnendurchmesser DL ist, der durch den radialen, diagonalen freien Abstand der ersten Lagerelemente 260 bestimmt ist, wie dies insbesondere aus Fig. 8A und 8B ersichtlich ist. Dies ist ein allgemeines Merkmal. Im Ausführungsbeispiel ist auch der radiale Querdurchmesser DS gleich dem Fuß-Querdurchmesser DF. Der Querdurchmesser DS ist das Abstandsmaß zwischen den Lagerrändern 341. Es entspricht dem korrespondierenden Abstandsmaß zwischen den Stegen von U-förmigen Gleitaufnahmen 261, die die ersten Lagerelemente 26 insbesondere in Form von Gleitschuhen 262 bilden können.

Der Ventilfuß 32 ist allgemein zum Anbringen der Steuerelemente 55 eingerichtet, die in die Steuerkurven 530 der Führungskulisse 53 einfassen. Im Ausführungsbeispiel sind Steuerrollen 551 an radiale Enden des Ventilfußes 32 ansetzbar. In dem Ventilfuß 32 ist eine radiale Durchgangsbohrung 325 eingebracht, die zum Lagern von Lagerbolzen 552 der Steuerrollen 551 eingerichtet ist. Die Rollen-Lagerbolzen 552 sind lösbar in die um 180° gegenüberliegenden Lagerlöcher der Durchgangsbohrung 325 einsetzbar.

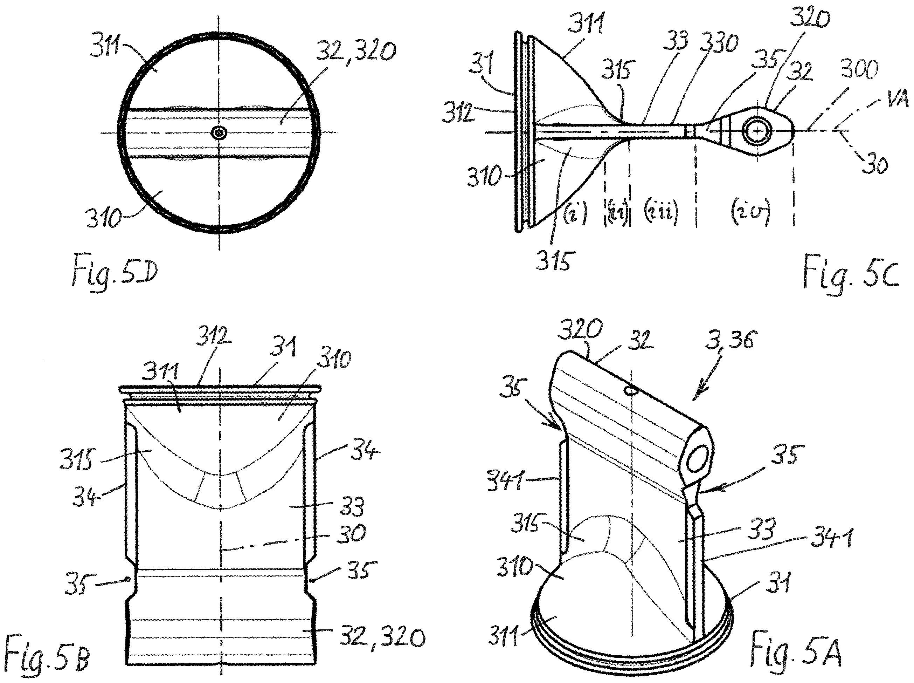

Die räumliche Ansicht gemäß Fig. 5A mit Draufsicht auf eine Flachseite des Ventilstegteils 33 (Fig. 5B) sowie eine Längsansicht der Schmalseite gemäß Fig. 5C mit zugehöriger Rückansicht (Fig. 5D) verdeutlichen die Gestaltung eines erfindungsgemäßen Strömungsprofils des einstückigen Strömungskörpers 36. Allgemein sind Übergangsflächen zwischen den Teilen des Ventil-Srömungskörpers 36 glatt, eben und stetig. Das Strömungsprofil ist unterbrechungsfrei und dadurch ungestört gleichförmig.

Eine bevorzugte Grundform des Strömungsprofils besteht allgemein in folgender Gestaltung. Der Ventilkopf 31 weist im Wesentlichen die Kurvenkontur eines Drehkörperabschnitts 310 auf, der sitzseitig mit einer Ventiltellerfläche 312 abschließt und stetig, nämlich nahtlos und ohne Querteile oder abrupte Strömungsecken oder -kanten in den Ventilstegteil 33 übergeht. Eine mittlere schmalseitige Kontur wird durch die Plattenränder, im Ausführungsbeispiel die Lagerränder 341, des plattenförmigen flachen Stegelements 330 bestimmt. Die Kontur des Ventilfußes 32 ist durch einen Grundquerschnitt des Verdickungsabschnitts des Fuß-Querelements 320 gebildet.

Wie ersichtlich, weist der Ventil-Strömungskörper 36 gemäß Fig. 5A bis 5D zwei gegenüberliegende übereinstimmende schmalseitige Längsansichten auf. Wie insbesondere aus Fig. 5C hervorgeht, ist die Strömungskontur an einer inneren gedachten Platten-Flachfläche 300 gespiegelt. Die Platten-Flachfläche 300 stimmt im Ausführungsbeispiel mit der axialen Ventilkörper-Lagerebene VA überein. In der Längsansicht gemäß Fig. 5C ist die Außenkontur gebildet durch, sitzseitig beginnend, einen ersten Kurvenabschnitt (i). Dieser durch eine Kopfkuppe 311 gebildete Abschnitt ist durch die Form des Drehkörperabschnitts 310 bestimmt, der im Ausführungsbeispiel die Form eines konvex gewölbten, insbesondere einer Kugelform angenäherten Abschnitts aufweist. Der Kurvenabschnitt (i) geht stetig in einen in der Richtung gewendeten anschließenden zweiten Kurvenabschnitt (ii) über, der durch einen konkavförmigen Übergangsbereich 315 zwischen dem Drehkörperabschnitt 310 und dem Stegelement 330 gebildet ist und der sich über den Drehkörperabschnitt 310 durchgehend zwischen den Plattenrändern erstreckt. Der Kurvenabschnitt (ii) geht stetig in einen linearen geraden Abschnitt (iii) über, der durch das plattenförmige Stegelement 330 bestimmt ist, und zwar unter flachem Winkel. Ein vierter Kurvenabschnitt (iv) der Strömungskontur ist insbesondere durch den ovalförmigen Zylinderquerschnitt des Ventilfußes 32 bestimmt.

Im Ausführungsbeispiel sind an den fußseitigen Enden der Lagerränder 341 zwischen dem Ventilstegteil 33 und dem Ventilfuß 32 schmalseitig Ausformungen ausgebildet, die als Montageausnehmungen 35 einer besonderen Schlüsselverbindung zur Montage/Demontage des Führungs-Radiallagers 25 vorgesehen sind. Man erkennt, dass die schmalseitigen Ausformungen, die im Ausführungsbeispiel trapezförmig sind, das durch die Strömungs-Konturabschnitte (i) bis (iv) bestimmte Strömungsprofil nicht oder nur vernachlässigbar beeinflussen. Insbesondere ist wesentlich, dass der Ventilstegteil 33 und der Ventilfuß 32 einen Axialabschnitt mit gleichem Querdurchmesser DS und DF bilden. Mit dieser allgemeinen Gestaltung kommen der Ventilfuß 32 und der Ventilstegteil 33 passgenau in dem Führungs-Sitzring 2 und in der Steuerkurvenhülse 51 zu liegen, wobei die freie axiale Bewegung des Ventil-Strömungskörpers 36 sichergestellt bleibt. Die Fluidströmung wird innerhalb des Fluid-Durchgangsraums 62 in zwei definierte ungestörte Strömungszweige aufgeteilt.

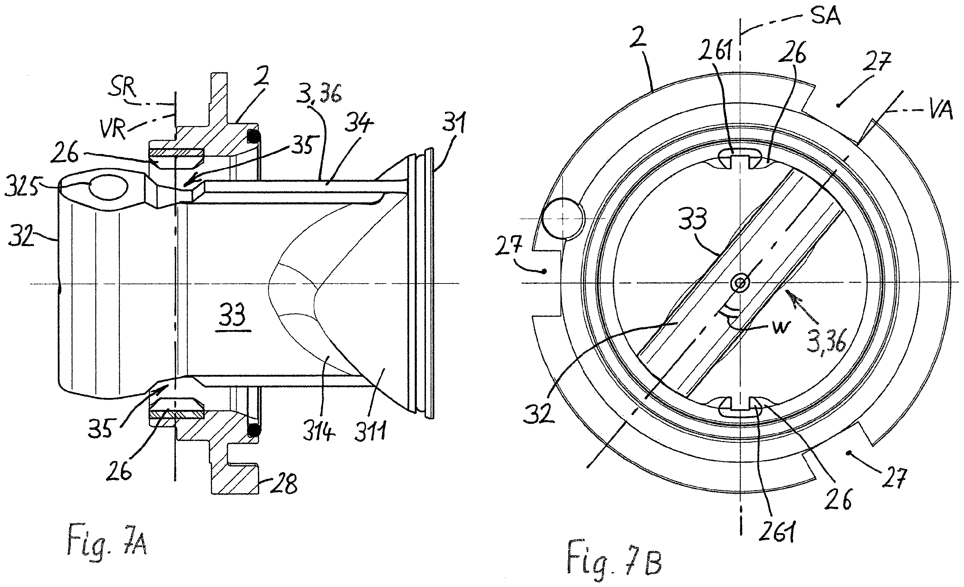

Die Schlüsselverbindung des Führungs-Radiallagers 25 ist zwischen den nasenförmigen Lagerelementen 260 und den schienenförmigen Lagerelementen 340 eingerichtet. Die Montageausnehmungen 35 sind Zwischenstellen längs des Ventil-Strömungskörpers 36, die zur Montage und Demontage der Ventil-Baueinheit 1 durch relative Drehverstellung und Axialverstellung zwischen dem Führungs-Sitzring 2 und dem Ventilkörper 3 mit den zugehörigen nasenförmigen, allgemein formgleichen Lagerelementen 260 in deckungsgleiche freie Montagepositionen setzbar sind. Dies geht insbesondere aus Fig. 6A, 6B, 7A, 7B und Fig. 8A, 8B hervor. Eine Radialebene SR, in der die ersten Lagerelemente 26 liegen, und eine Radialebene VR, in der sich die Montageausnehmungen 35 befinden, fallen zusammen. Die Dimensionierung des Ventilstegteils 33 ist so, dass der axiale Hub, der zum Öffnen des Aufnahmeteil-Ventils 4 vorgesehen wird, kleiner ist als der aus Fig. 6A ersichtliche maximale Abstand zwischen den Radialebenen SR, VR.

In jedem Paar der Lagerelemente 26, 34 sind das nasenförmige Lagerelement 260 mit seiner U-förmigen Ausnehmung und das schienenförmige Lagerelement 340 auf dem Weg über die Montageausnehmungen 35 axial in die Überlappungsverbindung setzbar bzw. aus dieser herausführbar. Das nasenförmige Lagerelement 260 ist durch relativen Drehversatz zwischen dem Führungs-Sitzring 2 und dem Ventilkörper 3 in die Montageausnehmung 35 hineinbewegbar bzw. aus ihr herausbewegbar. Außerhalb der Deckungsposition liegen das nasenförmige Lagerelement 260 und das schienenförmige Lagerelement 340 in zwei unterschiedlichen Axialebenen. Das heißt, dass die axiale Sitzring-Lagerebene SA, in der die nasenförmigen Lagerelemente 260 liegen, mit der axialen Ventilkörper-Lagerebene VA, in der die schienenförmigen Lagerelemente 340 liegen, nicht zusammenfallen.

## Patentansprüche

1. Trockenkupplungs-Aufnahmeteil (6), eingerichtet für eine Fluid-Trockenkupplung (100), umfassend
**(i)** ein sich entlang einer zentralen Aufnahmeteilachse (60) axial erstreckendes rohrförmiges Aufnahmeteilgehäuse (61) mit einem ersten Gehäuseende (611) zum Kuppeln mit einem Trockenkupplungs-Steckteil (7) der Trockenkupplung (100) sowie mit einem zweiten Gehäuseende (612) zur Verbindung mit einem Leitungselement,
**(ii)** eine in dem Aufnahmeteilgehäuse (61) angeordnete Ventileinrichtung (1), gebildet durch einen Führungs-Sitzring (2) mit einer Sitzring-Innenwand (21) sowie durch einen den Führungs-Sitzring (2) mit einem Teil durchfassenden, an dem Führungs-Sitzring (2) mittels eines Führungs-Radiallagers (25) radial gelagerten und axial gleitbewegbaren, mit Fluid außenumströmbaren Ventilkörper (3), wobei der Führungs-Sitzring (2) zum Kuppeln in eine gegen Drehung um die Aufnahmeteilachse (60) gesicherte Sperrposition setzbar ist,
- wobei der Ventilkörper (3) einen Ventilkopf (31), einen außerhalb des Führungs-Sitzrings (2) liegenden Ventilfuß (32) sowie einen mittels des Führungs-Radiallagers (25) an der Sitzring-Innenwand (21) gelagerten Ventilstegteil (33) aufweist, der den Ventilkopf (31) und den Ventilfuß (32) miteinander verbindet und axial beabstandet, und
- wobei der Führungs-Sitzring (2) an dem ersten Sitzringende (23) einen Ventilsitz (41) aufweist, der zusammen mit dem Ventilkopf (31) ein Aufnahmeteil-Ventil (4) bildet, wobei der Ventilkopf (31) in Ventil-Schließposition (401) dichtend in den Ventilsitz (41) einfasst und in Ventil-Öffnungsposition (402) an dem ersten Sitzringende (23) aus dem Führungs-Sitzring (2) hervortritt,
**(iii)** eine Aufnahmeteil-Steuereinrichtung (5), mittels der der Ventilkörper (3) in die Ventil-Öffnungsposition (402) sowie umgekehrt in die Ventil-Schließposition (401) bewegbar ist, umfassend eine um die Aufnahmeteilachse (60) drehbare Steuerhülse (51) mit einer Führungskulisse (53) sowie Steuerelemente (55), die an dem Ventilfuß (32) angeordnet sind und die in die Führungskulisse (53) einfassen, wobei zentrale Körperachsen (30, 50, 20) des Ventilkörpers (3), der Steuerhülse (51) und des Führungs-Sitzrings (2) koaxial mit der Aufnahmeteilachse (60) sind, der Führungs-Sitzring (2) und die Steuerhülse (51) einen den Ventilkörper (3) mit Fluidströmung beaufschlagenden Fluid-Durchgangsraum (62) bilden und der axial bewegbar gelagerte Ventilkörper (3) durch richtungsabhängige Drehung der Steuerhülse (51) und entsprechende Axialverlagerung in die Ventil-Schließposition (401) bzw. die Ventil-Öffnungsposition (402) setzbar ist,
**dadurch gekennzeichnet, dass** der außenumströmbare Ventilkörper (3) einstückig ausgebildet ist, wobei der Ventilkopf (31), der Ventilstegteil (33) und der Ventilfuß (32) einen einstückigen Ventil-Strömungskörper (36) mit einem unterbrechungsfreien, dadurch ungestört gleichförmigen Strömungsprofil bilden und wobei sich der Führungs-Sitzring (2) und der Ventil-Strömungskörper (36) in einem Lagersitz des Führungs-Radiallagers (25) befinden, der zwischen dem Führungs-Sitzring (2) und dem Ventilkörper (3) relative Drehung sperrt und relative axiale Gleitbewegbarkeit zulässt, wobei in dem Lagersitz korrespondierende Lagerelemente, nämlich erste Lagerelemente (26), die an der Sitzring-Innenwand (21) hervorstehen, sowie zweite Lagerelemente (34), die an dem Ventilstegteil (33) ausgebildet sind, in wenigstens einer axialen Lagersitz-Lagerebene (LA) liegen, wobei die korrespondierenden Lagerelemente zum Herstellen sowie zum Beseitigen des Lagersitzes durch relativen Drehversatz und relativen Axialversatz zwischen dem Führungs-Sitzring (2) und dem Ventilkörper (3) an Zwischenstellen längs des den Führungs-Sitzring (2) durchfassenden Ventilkörpers (3) zusammensteckbar und umgekehrt voneinander trennbar sind.

2. Aufnahmeteil nach Anspruch 1, **dadurch gekennzeichnet, dass** der einstückige Ventil-Strömungskörper (36) mit seinem Strömungsprofil dergestalt ist, dass der Ventilkopf (31) gebildet ist durch einen eine Kurvenkontur aufweisenden Drehkörperabschnitt (310), der an einer Kopfoberseite eine Ventiltellerfläche (312) aufweist und stetig in den Ventilstegteil (33) übergeht, dass der Ventilstegteil (33) gebildet ist durch wenigstens ein plattenförmiges Stegelement (330) mit Lagerelemente (34) des Führungs-Radiallagers (25) bildenden Plattenrändern, wobei das plattenförmige Stegelement (330) stetig in den Ventilfuß (32) übergeht, und dass der Ventilfuß (32) gebildet ist durch wenigstens ein radiales Fuß-Querelement (320), das zur zentralen Körperachse (30) des Ventilkörpers (3) senkrecht gerichtet ist.

3. Aufnahmeteil nach Anspruch 2, **dadurch gekennzeichnet, dass** das plattenförmige Stegelement (330) axiale Plattenränder aufweist, die schienenartige Lagerelemente (34) des Führungs-Radiallagers (25) bilden.

4. Aufnahmeteil nach Anspruch 2 oder 3, **dadurch gekennzeichnet, dass** der Drehkörperabschnitt (310) die Form eines konvex gewölbten Abschnitts (311) aufweist.

5. Aufnahmeteil nach Anspruch 4, **dadurch gekennzeichne**t, dass das Strömungsprofil in wenigstens zwei Längsansichten entlang der zentralen Körperachse (30) des Ventilkörpers (3) jeweils eine Außenkontur aufweist, die gebildet ist durch, kopfseitig beginnend, einen die Form des genannten Drehkörperabschnitts (310) bestimmenden ersten Kurvenabschnitt (i), einen in der Richtung gewendeten anschließenden zweiten Kurvenabschnitt (ii), einen durch das axial ausgerichtete plattenförmige Stegelement (330) bestimmten linearen geraden dritten Abschnitt (iii), in den der zweite Kurvenabschnitt (ii) unter flachem Winkel übergeht, und einen vierten Kurvenabschnitt (iv), in den der dritte Abschnitt übergeht und der durch einen Fußquerschnitt des Fuß-Querelements (320) bestimmt ist, mit dem das fußseitige Ende des Ventilkörpers (3) dicker als das plattenförmige Stegelement (330) ist.

6. Aufnahmeteil nach Anspruch 5, **dadurch gekennzeichnet, dass** das Strömungsprofil in zwei entsprechenden, um 180° gegenüberliegenden genannten Längsansichten jeweils die genannte Außenkontur aufweist.

7. Aufnahmeteil nach einem der Ansprüche 1 bis 6, **dadurch gekennzeichne**t, dass radiale Querdurchmesser (DS, DF) des Ventilstegteils (33) und des Ventilfußes (32) gleich sind und einem Innendurchmesser (DI) des Fluid-Durchgangsraums (62) entsprechen.

8. Aufnahmeteil nach einem der Ansprüche 1 bis 7, **dadurch gekennzeichnet, dass** die Ventileinrichtung (1) als eine durch Zusammensetzen des Ventil-Strömungskörpers (36) und des Führungs-Sitzrings (2) vorfertigbare Ventil-Baueinheit gebildet ist.

9. Aufnahmeteil nach Anspruch 8, **dadurch gekennzeichnet, dass** der Ventilfuß (32) durch wenigstens ein das Strömungsprofil fußseitig bestimmendes radiales Fußquerelement (320) gebildet ist, das in der Lagersitz-Lagerebene (LA) ausgerichtet ist und einen radialen Fuß-Querdurchmesser (DF) aufweist, der größer als ein Lagerinnendurchmesser (DL) ist, der durch diagonalen freien Abstand der ersten Lagerelemente (26) bestimmt ist.

10. Aufnahmeteil nach Anspruch 9, **dadurch** g**ekennzeichnet**, dass die ersten Lagerelemente (26) nasenförmige Lagerelemente (260) und die zweiten Lagerelemente (34) schienenförmige Lagerelemente (340) sind und dass zwischen den schienenförmigen Lagerelementen (340) und dem Fußquerelement (320) die Zwischenstellen bildende Montageausnehmungen (35) ausgebildet sind, in die die nasenförmigen Lagerelemente (260) zum Herstellen und Beseitigen des Lagersitzes durch den relativen Drehversatz und den relativen Axialversatz setzbar sind.

11. Fluid-Trockenkupplung (100), gebildet durch ein Trockenkupplungs-Aufnahmeteil (6) nach einem der Ansprüche 1 bis 10 und ein an das Trockenkupplungs-Aufnahmeteil (6) angeschlossenes Trockenkupplungs-Steckteil (7) mit einem einen Steckteil-Ventilkörper (751) aufweisenden Steckteil-Ventil (75), wobei der Ventil-Strömungskörper (36) des Trockenkupplungs-Aufnahmeteils (6) und der Steckteil-Ventilkörper (751) des Trockenkupplungs-Steckteils (7) in einem axial verlagerbaren Schiebeverbund aneinander sitzen, der gegen Rückstellkraft aus zugehörigen Ventil-Schließpositionen (401, 701) in Ventil-Öffnungspositionen (402, 702) setzbar ist.

## Claims

1. Dry-coupling receiving part (6), configured for a dry-coupling for fluid (100), comprising
**(i)** a tubular receiving-part housing (61) extending axially along a central receiving-part axis (60) having a first housing end (611) for coupling with a dry-coupling plug-in part (7) of the dry coupling (100) and having a second housing end (612) for connecting to a pipe element,
**(ii)** a valve device (1) arranged in the receiving-part housing (61), formed by a guide seat ring (2) with a seat ring inner wall (21) and by a guide seat ring (2) with a part passing through an axially slidable valve body (3), around the outside of which fluid can flow, which is radially mounted on the guide seat ring (2) by means of a guiding radial bearing (25), wherein for coupling the guide seat ring (2) can be placed in a locking position secured against rotation about the receiving-part axis (60),
- wherein the valve body (3) has a valve head (31), a valve base (32) situated outside the guide seat ring (2) and a valve web part (33) mounted by means of the guiding radial bearing (25) on the seat ring inner wall (21), said valve web part joining the valve head (31) and the valve base (32) together and spacing them apart axially, and
- wherein the guide seat ring (2) has a valve seat (41) on the first seat ring end (23), which together with the valve head (31) forms a receiving-part valve (4), wherein the valve head (31) engages sealingly in the valve seat (41) in the closing position (401) of the valve and protrudes from the guide seat ring (2) on the first seat ring end (23) in the opening position (402) of the valve,
**(iii)** a receiving-part control device (5), by means of which the valve body (3) is movable into the opening position (402) of the valve and conversely into the closing position (401) of the valve, comprising a control sleeve (51) rotatable about the receiving-part axis (60) with a guiding link (53) and control elements (55) which are arranged on the valve base (32) and which engage in the guiding link (53), wherein central body axes (30, 50, 20) of the valve body (3), the control sleeve (51) and the guide seat ring (2) are coaxial with the receiving-part axis (60), the guide seat ring (2) and the control sleeve (51) form a fluid passage space (62) which charges the valve body (3) with fluid flow, and the valve body (3) mounted so as to be axially movable can be placed, due to directionally dependent rotation of the control sleeve (51) and corresponding axial displacement, into the closing position (401) of the valve or the opening position (402) of the valve,
**characterised in that** the valve body (3), around the outside of which fluid can flow, is formed in one piece, wherein the valve head (31), the valve web part (33) and the valve base (32) form a one-piece valve flow body (36) with an uninterrupted, thereby undisturbedly uniform flow profile and wherein the guide seat ring (2) and the valve flow body (36) are located in a bearing seat of the guiding radial bearing (25) which blocks relative rotation between the guide seat ring (2) and the valve body (3) and permits relative axial sliding mobility, wherein corresponding bearing elements in the bearing seat, namely first bearing elements (26) which protrude on the seat ring inner wall (21), and second bearing elements (34) which are formed on the valve web part (33), lie in at least one axial bearing seat bearing plane (LA), wherein the corresponding bearing elements can be plugged together and conversely separated from each other to make and unmake the bearing seat by means of relative rotary displacement and relative axial displacement between the guide seat ring (2) and the valve body (3) at intermediate points along the valve body (3) which passes through the guide seat ring (2).

2. Receiving part according to claim 1, **characterised in that** the one-piece valve flow body (36) with its flow profile is such that the valve head (31) is formed by a body of rotation section (310) having a curved contour, said valve head having a valve disk surface (312) on the upper side of the head and merging continuously into the valve web part (33), **in that** the valve web part (33) is formed by at least one plate-shaped web element (330) with plate edges forming bearing elements (34) of the guiding radial bearing (25), wherein the plate-shaped web element (330) merges continuously into the valve base (32), and **in that** the valve base (32) is formed by at least one radial base transverse element (320) which is oriented perpendicular to the central body axis (30) of the valve body (3).

3. Receiving part according to claim 2, **characterised in that** the plate-shaped web element (330) has axial plate edges which form rail-like bearing elements (34) of the guiding radial bearing (25).

4. Receiving part according to claim 2 or 3, **characterised in that** the body of rotation section (310) has the shape of a convexly curved section (311).

5. Receiving part according to claim 4, **characterised in that** the flow profile in at least two longitudinal views along the central body axis (30) of the valve body (3) has an outer contour in each case which is formed, starting on the head side, by a first curve section (i) determining the shape of the said body of rotation section (310), a subsequent second curve section (ii) turned in direction, a linear straight third section (iii) determined by the axially oriented plate-shaped web element (330), into which third section the second curve section (ii) merges at a shallow angle, and a fourth curve section (iv) into which the third section merges and which is determined by a base cross-section of the base transverse element (320), with which the base side end of the valve body (3) is thicker than the plate-shaped web element (330).

6. Receiving part according to claim 5, **characterised in that** the flow profile has the said outer contour in each of two corresponding longitudinal views which are opposed by 180°.

7. Receiving part according to any one of claims 1 to 6, **characterised in that** radial transverse diameters (DS, DF) of the valve web part (33) and the valve base (32) are identical and correspond to an inner diameter (DI) of the fluid passage space (62).

8. Receiving part according to any one of claims 1 to 7, **characterised in that** the valve device (1) is designed as a valve assembly which can be prefabricated by assembling the valve flow body (36) and the guide seat ring (2).

9. Receiving part according to claim 8, **characterised in that** the valve base (32) is formed by at least one radial base transverse element (320), which determines the flow profile on the base side, said radial base transverse element being oriented in the bearing seat bearing plane (LA) and having a radial base transverse diameter (DF) which is greater than an inner diameter of the bearing (DL), said inner diameter being determined by the diagonal clearance of the first bearing elements (26).

10. Receiving part according to claim 9, **characterised in that** the first bearing elements (26) are tapered bearing elements (260) and the second bearing elements (34) are rail-shaped bearing elements (340) and that configured between the rail-shaped bearing elements (340) and the base transverse element (320) are mounting recesses (35) which form the intermediate points, into which mounting recesses the tapered bearing elements (260) can be placed to make and unmake the bearing seat by means of the relative rotary displacement and the relative axial displacement.

11. Dry coupling (100) for fluid, formed by a dry-coupling receiving part (6) according to any one of claims 1 to 10 and a dry-coupling plug-in part (7) connected to the dry-coupling receiving part (6) with a plug-in-part valve (75) having a plug-in-part valve body (751), wherein the valve flow body (36) of the dry-coupling receiving part (6) and the plug-in-part valve body (751) of the dry-coupling plug-in part (7) sit against each other in an axially displaceable sliding combination, which can be placed out of associated closing positions (401, 701) of the valve into opening positions (402, 702) of the valve against the restoring force.

## Revendications

1. Élément de logement d'un embrayage à sec (6) conçu pour un embrayage à sec pour fluides (100), comprenant
**(i)** un boîtier d'élément de logement (61) tubulaire s'étendant axialement le long d'un axe central d'élément de logement (60), doté d'une première extrémité de boîtier (611) destinée à être couplée avec une fiche d'embrayage à sec (7) de l'embrayage à sec (100) ainsi que d'une deuxième extrémité de boîtier (612) destinée à être reliée à une pièce de conduite,
**(ii)** un dispositif de soupape (1) agencé dans le boîtier d'élément de logement (61), formé par une bague de siège de guidage (2) dotée d'une paroi intérieure de bague de siège (21) ainsi que par un corps de soupape (3) susceptible d'être parcouru à l'extérieur par un flux de fluide, mobile de façon coulissante dans le sens axial, monté radialement sur la bague de siège de guidage (2) au moyen d'un palier radial de guidage (25) et traversant d'une partie la bague de siège de guidage (2), la bague de siège de guidage (2) étant, pour le couplage, susceptible d'être mise dans une position de verrouillage sécurisée contre toute rotation autour de l'axe de l'élément de logement (60),
- le corps de soupape (3) présentant une tête de soupape (31), un pied de soupape (32) situé à l'extérieur de la bague de siège de guidage (2) ainsi qu'un élément de tige de soupape (33) monté sur la paroi intérieure de la bague de siège (21) au moyen du palier radial de guidage (25), lequel élément de tige de soupape relie la tête de soupape (31) au pied de soupape (32) et les espace l'un de l'autre dans le sens axial, et
- la bague de siège de guidage (2) présentant à la première extrémité de bague de siège (23) un siège de soupape (41) qui forme avec la tête de soupape (31) une soupape d'élément de logement (4), la tête de soupape (31) pénétrant de manière hermétique dans le siège de soupape (41) en position de fermeture de la soupape (401) et saillant au-dehors de la bague de siège de guidage (2) à la première extrémité de bague de siège (23) en position d'ouverture de la soupape (402),
**(iii)** un dispositif de commande d'élément de logement (5), au moyen duquel le corps de soupape (3) est susceptible d'être déplacé dans la position d'ouverture de la soupape (402) ainsi que, à l'inverse, dans la position de fermeture de la soupape (401), comprenant une douille de commande (51) rotative autour de l'axe de l'élément de logement (60) et dotée d'une coulisse de guidage (53), ainsi que des éléments de commande (55) qui sont agencés sur le pied de soupape (32) et qui pénètrent dans la coulisse de guidage (53), des axes centraux (30, 50, 20) du corps de soupape (3), de la douille de commande (51) et de la bague de siège de guidage (2) étant coaxiaux avec l'axe de l'élément de logement (60), la bague de siège de guidage (2) et la douille de commande (51) formant un espace de passage de fluide (62) appliquant un courant de fluide au corps de soupape (3), et le corps de soupape (3), monté mobile dans le sens axial, étant susceptible d'être mis dans la position de fermeture de la soupape (401) voire dans la position d'ouverture de la soupape (402) en tournant la douille de commande (51) en fonction du sens et par déplacement axial correspondant,
**caractérisé en ce que** le corps de soupape (3) susceptible d'être parcouru à l'extérieur par un flux est formé d'un seul tenant, la tête de soupape (31), l'élément de tige de soupape (33) et le pied de soupape (32) formant un corps de soupape monobloc soumis à un flux (36), avec un profil soumis à un flux exempt d'interruption donc d'une homogénéité continue, et la bague de siège de guidage (2) et le corps de soupape soumis à un flux (36) se trouvant dans un siège de palier du palier radial de guidage (25) qui bloque toute rotation relative mais autorise une mobilité coulissante axiale relative entre la bague de siège de guidage (2) et le corps de soupape (3), des éléments de palier correspondants dans le siège de palier, c'est-à-dire des premiers éléments de palier (26) en saillie sur la paroi intérieure de la bague de siège (21), ainsi que des deuxièmes éléments de palier (34), qui sont conçus sur l'élément de tige de soupape (33), sont au moins dans un plan axial de palier (LA) de siège de palier, les éléments de palier correspondants étant, pour réaliser comme pour annuler le siège de palier, susceptibles d'être assemblés les uns aux autres et, à l'inverse, séparés les uns des autres par déport de rotation relatif et par déport axial relatif entre la bague de siège de guidage (2) et le corps de soupape (3) à des points intermédiaires situés le long du corps de soupape (3) pénétrant dans la bague de siège de guidage (2).

2. Élément de logement selon la revendication 1, **caractérisé en ce que** le corps de soupape monobloc soumis à un flux (36) est, avec son profil soumis à un flux, tel que la tête de soupape (31) est formée par une portion de corps rotatif (310) présentant un contour d'arrondi, laquelle présente une surface de disque de soupape (312) sur une face supérieure de la tête et se prolonge de manière constante dans l'élément de tige de soupape (33), que l'élément de tige de soupape (33) est formé par au moins un élément de tige en forme de plaque (330) doté de bords de plaque formant des éléments de palier (34) du palier radial de guidage (25), l'élément de tige en forme de plaque (330) se prolongeant de manière constante dans le pied de soupape (32), et que le pied de soupape (32) est formé par au moins un élément transversal de pied (320) radial qui est dirigé à la verticale de l'axe central de corps (30) du corps de soupape (3).

3. Élément de logement selon la revendication 2, **caractérisé en ce que** l'élément de tige en forme de plaque (330) présente des bords de plaque axiaux qui forment des éléments de palier (34), en forme de rail, du palier radial de guidage (25).

4. Élément de logement selon la revendication 2 ou 3, **caractérisé en ce que** la portion de corps rotatif (310) a la forme d'une portion cintrée de manière convexe (311).

5. Élément de logement selon la revendication 4, **caractérisé en ce que** le profil soumis à un flux présente dans au moins deux vues en longueur le long de l'axe central de corps (30) du corps de soupape (3) un contour extérieur respectif qui est formé par, en commençant par la tête, une première portion d'arrondi (i) déterminant la forme de ladite portion de corps rotatif (310), une deuxième portion d'arrondi (ii) ultérieure tournée dans ce sens, une troisième portion (iii) droite linéaire déterminée par l'élément de tige en forme de plaque (330) dirigé axialement dans laquelle se prolonge la deuxième portion d'arrondi (ii) dans un angle plat, et une quatrième portion d'arrondi (iv) dans laquelle se prolonge la troisième portion et qui est déterminée par une section transversale de pied de l'élément transversal de pied (320) à laquelle l'extrémité du corps de soupape (3) située du côté du pied est plus épaisse que l'élément de tige en forme de plaque (330).

6. Élément de logement selon la revendication 5, **caractérisé en ce que** le profil soumis à un flux présente ledit contour extérieur dans chacune desdites deux vues en longueur correspondantes opposées l'une à l'autre dans un angle de 180°.

7. Élément de logement selon l'une quelconque des revendications 1 à 6, **caractérisé en ce que** des diamètres transversaux radiaux (DS, DF) de l'élément de tige de soupape (33) et du pied de soupape (32) sont les mêmes et correspondent à un diamètre intérieur (DI) de l'espace de passage du fluide (62).

8. Élément de logement selon l'une quelconque des revendications 1 à 7, **caractérisé en ce que** le dispositif de soupape (1) est formé en tant que module de soupape susceptible d'être préfabriqué par assemblage du corps de soupape soumis à un flux (36) et de la bague de siège de guidage (2).

9. Élément de logement selon la revendication 8, **caractérisé en ce que** le pied de soupape (32) est formé par au moins un élément transversal de pied (320) radial déterminant, du côté du pied, le profil soumis à un flux, lequel élément transversal de pied (320) radial est orienté dans le plan de palier de siège de palier (LA) et présente un diamètre transversal de pied (DF) radial supérieur à un diamètre intérieur de palier (DL), qui est déterminé par tout espace libre diagonal des premiers éléments de palier (26).

10. Élément de logement selon la revendication 9, **caractérisé en ce que** les premiers éléments de palier (26) sont des éléments de palier en forme de nez (260) et les deuxièmes éléments de palier (34), des éléments de palier en forme de rail (340), et que sont formées, entre les éléments de palier en forme de rail (340) et l'élément transversal de pied (320), des cavités de montage (35) formant les points intermédiaires, dans lesquelles les éléments de palier en forme de nez (260) sont susceptibles d'être mis pour réaliser et annuler le siège de palier par le déport de rotation relatif et le déport axial relatif.

11. Embrayage à sec pour fluides (100) formé par un élément de logement pour embrayage à sec (6) selon l'une quelconque des revendications 1 à 10 et une fiche d'embrayage à sec (7) raccordée à l'élément de logement pour embrayage à sec (6), dotée d'une soupape de fiche (75) présentant un corps de soupape de fiche (751), le corps de soupape soumis à un flux (36) de l'élément de logement pour embrayage à sec (6) et le corps de soupape de fiche (751) de la fiche d'embrayage à sec (7) étant l'un à côté de l'autre dans un assemblage de glissement susceptible d'être déplacé dans le sens axial et d'être mis dans des positions d'ouverture de la soupape (402, 702) contre toute force de rappel issue de positions de fermeture de la soupape (401, 701) correspondantes.
